**Europäisches Patentamt**

**European Patent Office**

**Office européen des brevets**

(19)

(11) Numéro de publication: **0 031 770 B1**

(12) **FASCICULE DE BREVET EUROPEEN**

(45) Date de publication du fascicule du brevet:
07.03.84

(51) Int. Cl.³: **F 02 B 37/12**, F 23 R 3/26

(21) Numéro de dépôt: **80401827.3**

(22) Date de dépôt: **18.12.80**

(54) **Perfectionnements apportés aux moteurs à combustion interne suralimentés, notamment aux moteurs Diesel.**

(30) Priorité: **19.12.79 FR 7931038**

(43) Date de publication de la demande:
**08.07.81 Bulletin 81/27**

(45) Mention de la délivrance du brevet:
**07.03.84 Bulletin 84/10**

(84) Etats contractants désignés:
**AT CH LI LU SE**

(56) Documents cités:
**FR - A - 2 253 389**
**US - A - 2 655 787**
**US - A - 4 026 115**

(73) Titulaire: **ETAT-FRANCAIS représenté par le DELEGUE GENERAL POUR L'ARMEMENT, Bureau des Brevets et Inventions de la Délégation Générale pour l'Armement 14, rue Saint-Dominique, F-75997 Paris Armées (FR)**

(72) Inventeur: **Melchior, Jean, 66 boulevard Maurice Barrès, F-92200 Neuilly-sur-Seine (FR)**
Inventeur: **Andre, Thierry, 126 boulevard Saint-Germain, F-75006 Paris (FR)**

(74) Mandataire: **Lemoine, Michel et al, Cabinet Michel Lemoine 13, boulevard des Batignolles, F-75008 Paris (FR)**

ACTORUM AG

### Perfectionnements apportés aux moteurs à combustion interne suralimentés, notamment aux moteurs Diesel

L'invention est relative aux moteurs à combustion suralimentés, en particulier aux moteurs Diesel suralimentés, comprenant, d'une part, un compresseur qui débite de l'air frais en parallèle sur le moteur et sur un passage de dérivation muni d'une chambre de combustion auxiliaire et, d'autre part, une turbine qui reçoit les gaz d'echappement du moteur et les gaz issus de la chambre de combustion auxiliaire et qui entraîne mécaniquement le compresseur,

lequel passage de dérivation est divisé en deux branches principales dont la première aboutit dans une zone de dilution ou «zone secondaire» située en aval de la pertie amont »zone primaire» de la chambre de combustion auxiliaire et est munie de premiers moyens d'étranglement à section de passage variable et dont la deuxième branche part d'un endroit situé en amont des premiers moyens d'étranglement et débouche dans la zone primaire par l'intermédiaire de seconds moyens d'étranglement,

lesquels seconds moyens d'étranglement comprennent des passages de section libre variable, ménagés respectivement dans deux organes intérieur et exterieur qui sont mobiles l'un par rapport à l'autre et dont l'un délimite au moins en partie la zone primaire alors que l'autre est logé au moins en partie dans une cavité reliée à la sortie du compresseur, au moins un injecteur de combustible débouchant dans la zone primaire à proximité immédiate des susdits passages,

des moyens étant prévus pour faire varier corrélativement le débit du ou des injecteurs en combustible et, par un déplacement relatif des organes intérieur et extérieur,le débit d'air entrant dans la zone primaire par la section libre desdits passages.

De tels moteurs ont été décrits dans le brevet US 4 026 115 déposé au nom des mêmes inventeurs et cédé à l'Etat Français. En raison de la position des passages ou orifices conjugués qui agissent en seconds moyens d'étranglement par vannage aérodynamique (ou occultation de jets d'air par alignement partiel de paires de passages ou orifices conjugués) par rapport au ou aux injecteurs qui introduisent le combustible dans la zone primaire de la chambre de combustion auxiliaire d'une part et par rapport aux premiers moyens d'étranglement d'autre part qui créent une baisse de pression s'appliquant directement auxdits passages ou orifices conjugués, il se produit dans cette zone primaire une forte turbulence qui offre à la combustion les conditions optimales quel que soit le degré d'ouverture des passages ou orifices conjugués, c'est-à-dire à tous les régimes de fonctionnement de la chambre de combustion auxiliaire. On obtient ainsi des économies de combustible tout en évitant les problèmes liés aux depôts de suie et de coke sur les parois de la chambre de combustion auxiliaire. Par ailleurs, l'existence de cette baisse de pression permet de créer en permanence et efficacement, par l'intermédiaire de certains au moins de passages d'air de section constante qui font partie des seconds moyens d'étranglement, des courants d'air adéquats («film cooling») assurent notamment le refroidissement des parois de la zone primaire de la chambre de combustion auxiliaire à tous les régimes.

Il est à noter que le déplacement relatif des organes cylindriques intérieur et extérieur, qui sont en général constitués par des fourreaux, peut se faire par translation, par rotation, ou par translation et rotation, l'un au moins des organes cylindriques intérieur et extérieur étant mobile. En général, l'organe cylindrique extérieur est fixe tandis que l'organe cylindrique intérieur est mobile, de préférence en translation.

Etant donné que l'organe cylindrique extérieur est balayé par l'air débité par le compresseur, cet air tend à maintenir l'organe cylindrique extérieur à une température relativement basse et constante. Au contraire, l'organe cylindrique intérieur, qui délimite au moins en partie la zone primaire de la chambre de combustion auxiliaire, est porté à une température relativement élevée qui varie en fonction du débit du combustible introduit par le ou les injecteurs et brûlé dans cette zone primaire, les variations de cette température pouvant atteindre 600°C par exemple en cours de fonctionnement. Or les organes ou fourreaux cylindriques intérieur et extérieur sont fait d'un matériau (acier inoxydable réfractaire) qui subit des dilatations notables en fonction de la température (de l'ordre de 2 mm par mètre et par 100°C d'élévation de température).

Pour éviter le coincement mutuel des deux organes cylindriques à chaud (c'est-à-dire lorsque l'organe cylindrique intérieur est le plus chaud, ce qui correspond au débit maximal de combustible et d'air dans la zone primaire), il faut augmenter fortement le jeu radial à froid entre les deux organes cylindriques. Mais lors du fonctionnement en veilleuse de la chambre de combustion auxiliaire (débit minimal de combustible et d'air dans la zone primaire et combustion localisée dans le fond de la chambre), l'organe cylindrique intérieur se contracte radialement en se refroidissant et libère, entre sa paroi extérieure et la paroi intérieure de l'organe extérieure, un espace annulaire dont la section transversale est très importante (de l'ordre de 700 mm$^2$, lorsque le diamètre des organes ou fourreaux cylindriques est d'environ 200 mm, dans les conditions précisées ci-dessus en ce qui concerne les variations de température et le coefficient de dilatation). Cet espace annulaire laisse passer une fuite d'air d'autant plus importante que la pression de suralimentation est élevée puisque la densité de l'air est liée à la pression et que la différence de pression s'exerçant de part et d'autre de cette section de fuite croît avec la pression de suralimentation. Or c'est précisément dans ces conditions de pression élevée que le moteur est le plus chargé et doit donc être balayé le plus efficacement. Les tentatives qui ont été faites jusqu'ici pour réduire la susdite fuite, notamment par mise en place de labyrinthes à la périphérie de l'organe cylindrique intérieur, ont été infructueuses.

En conséquence, on se trouve confronté à l'alternative suivante:

— si le jeu radial est faible, l'organe cylindrique mobile se coince sur l'organe cylindrique fixe à plein débit, ce qui entraîne un maintien inutile de la chambre en position de plein débit (d'où surchauffe et perte de combustible);

— si le jeu radial est fort, la chambre de combustion auxiliaire fuit en régime de veilleuse; dans ce cas, les premiers moyens d'étranglement deviennent incapables de maîtriser la baisse de pression ou perte de charge entre compresseur et turbine, ce qui compromet le balayage correct du moteur aux puissances élevées, comme il a été expliqué ci-dessus, à moins que le débit du compresseur ne soit surdimensionné, ce qui aurait pour inconvénient de dégrader la consommation spécifique aux charges partielles.

L'invention a donc pour but de rémedier aux inconvénients dus à la dilatation différentielle des organes intérieur et extérieur, dans les moteurs à combustion interne définis en préambule, tout en conservant les avantages spécifiques de ces moteurs.

Pour atteindre ce but, le moteur à combustion interne conforme à l'invention est essentiellement caractérisé

en ce que des passages de section constante sont mis en parallèle par rapport aux susdits passages,

en ce que les organes intérieur et extérieur ont des dimensions radiales telles que, compte tenu des coefficients de dilatation thermique de leurs matières constitutives et des limites supérieure et inférieure de leurs températures de fonctionnement, il existe toujours entre eux un jeu radial suffisant pour éviter tout contact latéral entre ces organes que que soit le régime de fonctionnement de la chambre de combustion auxiliaire et

en ce que des troisièmes moyens d'étranglement, à section de passage variable, sont montés en amont ou à proximité des passages des seconds moyens d'étranglement, selon le sens de circulation de l'air dans la deuxième branche du passage de dérivation, et sont agencés de telle manière

a) que leur section de passage minimale soit nulle et

b) que, quels que soient les degrés d'ouverture respectifs instantanés des seconds et des troisièmes moyens d'étranglement, la section de passage des troisièmes moyens d'étranglement reste toujours, à moins d'être nulle, essentiellement supérieure à la section libre des passages des seconds moyens d'étranglement.

Ce qui est important, c'est que les troisièmes moyens d'étranglement n'entrent en action qu'après les seconds moyens d'étranglement car, dans le cas contraire, la perte de charge à créer dans la seconde branche du passage de dérivation se produirait au niveau des troisièmes moyens d'étranglement et non plus au niveau des passages, de préférence des orifices conjugués, ce qui, d'une part, supprimerait la pénétration de jets d'air radiaux dans la zone primaire et par conséquent la turbulence favorisant la combustion dans cette zone et d'autre part «décrocherait» la flamme du fond de la zone primaire. Il est à noter que l'existence de jeu radial permanent entre les deux organes, de préférence cylindriques, ne supprime pas l'existence des jets d'air à travers leurs passages conjugués lorsque ceux-ci sont alignés au moins partiellement mais a seulement pour effet de dévier un certain débit d'air vers la zone secondaire, par l'espace annulaire compris entre les deux organes cylindriques.

Bien que les premiers moyens d'étranglement puissent être actionnés manuellement, il y a intérêt à les agencer de manière qu'ils soient capables d'établir une baisse de pression qui est pratiquement indépendante du rapport entre le débit d'air dans le passage de dérivation et le débit total d'air délivré par le compresseur mais qui varie dans le même sens que la pression régnant en amont des premiers moyens d'étranglement. On obtient ainsi un fonctionnement automatique, adapté à toutes les conditions de marche du moteur.

Que les premiers moyens d'étranglement soient ou non actionnés automatiquement, il est préférable que le rapport entre la section de passage des troisièmes moyens d'étranglement, à moins d'être nulle, et la section libre des passages des seconds moyens d'étranglement reste supérieur à 5 dans toutes leurs positions instantanées respectives. On est ainsi assuré que la baisse de pression qui s'établit dans la deuxième branche du passage de dérivation se produit toujours à la traversée des seconds moyens d'étranglement et non à celle des troisièmes moyens d'étranglement.

Selon un mode de réalisation avantageux, les troisièmes moyens d'étranglement sont constitués par la combinaison d'un élément obturateur annulaire, monté sur l'un des organes cylindriques, et d'un siège, solidaire de l'autre organe cylindrique et coopérant avec ledit élément annulaire, le diamètre de ce siège étant largement supérieur aux diamètres respectifs desdits organes cylindriques. En variante, les troisièmes moyens d'étranglement peuvent être constitués par la combinaison d'un élément obturateur annulaire, se confondant avec l'extrémité libre de l'organe cylindrique extérieur, et un siège, solidaire de l'organe cylindrique intérieur et coopérant avec ladite extrémité libre, ce siège étant disposé au voisinage immédiat des passages de section variable.

Le susdit mode de réalisation et sa variante sont d'une construction particulièrement simple et permettent au siège de coopérer avec l'organe obturateur annulaire quelles que soient les températures et donc les dilatations respectives des deux organes cylindriques.

Les passages de section constante faisant partie des seconds moyens d'étranglement peuvent communiquer avec la cavité reliée à la sortie du compresseur soit directement, soit par l'intermédiaire des troisièmes moyens d'étranglement.

L'invention pourra de toute façon être mieux comprise à l'aide du complément de description qui suit ainsi que des dessins ci-annexés, lesquels complément et dessins sont relatifs, d'une part, à l'état de la technique et, d'autre part, à divers modes de réalisation de l'invention.

La figure 1 de ces dessins montre, en coupe schématique, un moteur à combustion interne connu.

La figure 2 montre, en coupe à plus grande échelle, la chambre de combustion auxiliaire du moteur de la figure 1.

La figure 3 indique schématiquement la répartition des débits d'air dans le moteur de la figure 1.

La figure 4 illustre, par une coupe axiale schématique prise au niveau de la chambre de combustion auxiliaire, un moteur à combustion interne conforme à un premier mode de réalisation de l'invention, le reste de ce moteur étant analogue à celui de la figure 1.

La figure 5 représente à plus grande échelle une paire des orifices conjugués qui font partie des seconds moyens d'étranglement du mode de réalisation de la figure 4.

Les figures 6 à 12 représentent chacune une variante du mode de réalisation de la figure 4.

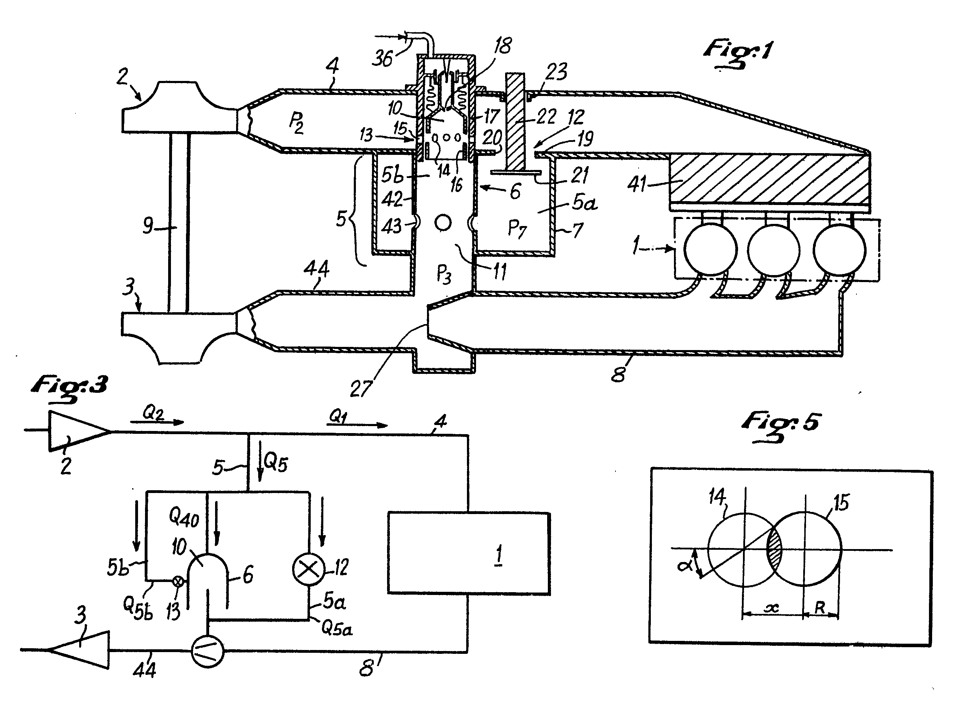

Avant d'aborder l'invention, il est utile de rappeler l'état de la technique tel qu'il ressort du susdit brevet US 4 026 115. La figure 1 ci-annexée est analogue à la figure 7 de ce brevet, mais complétée de façon appropriée.

Tel qu'il est représenté à la figure 1, le moteur à combustion interne connu 1 comprend un compresseur 2 qui débite de l'air frais en parallèle sur le moteur 1, par l'intermédiaire d'un conduit de refoulement 4 équipé d'un refroidisseur d'air de suralimentation 41, et sur un passage de dérivation 5 muni d'une chambre de combustion auxiliaire 6. Ce moteur 1 comprend également une turbine 3 qui reçoit les gaz d'échappement du moteur 1 par l'intermédiaire d'un conduit d'échappement 8 et les gaz issu de la chambre de combustion auxiliaire 6 et qui entraîne mécaniquement le compresseur 2, généralement par l'intermédiaire d'un arbre 9. La chambre de combustion auxiliaire 6 est divisée, d'amont en aval, en une zone primaire 10 et en une zone secondaire 11 ou zone de dilution.

Le passages de dérivation 5 est divisé en deux branches principales 5a et 5b. La première branche 5a aboutit dans la zone secondaire 11 et est munie de premiers moyens d'étranglement 12 à section de passage variable. De préférence, ces premiers moyens d'étranglement 12 sont capables d'établir une baisse de pression qui est pratiquement indépendante du rapport entre le débit d'air dans le passage de dérivation 5 et le débit total d'air délivré par le compresseur 2 mais qui varie dans le même sens que la pression régnant en amont de ces premiers moyens d'étranglement 12. La deuxième branche 5b part d'un endroit de la première branche 5a situé en amont des premiers moyens d'étranglement 12 et débouche dans la zone primaire 10 par l'intermédiaire de seconds moyens d'étranglement 13 de la section de passage.

Comme le montre la figure 2, les seconds moyens d'étranglement 13 comprennent des orifices conjugués 14 et 15, ménagés respectivement dans un fourreau cylindrique intérieur 16 qui délimite au moins en partie la zone primaire 10 et dans un fourreau cylindrique extérieur 17 qui délimite en partie une cavité 32 reliée directement à la sortie du compresseur 2. Selon le mode de réalisation des figures 1 et 2, cette cavité 32 est constituée par la partie du conduit de refoulement 4 qui entoure le fourreau cylindrique extérieur 17. Un injecteur de combustible 18 (selon la figure 2) ou plusieurs injecteurs de combustible (selon la figure 12 qui sera décrite ci-après) débouchent dans la zone primaire 10 à proximité immédiate des orifices d'étranglement conjugués 14, 15.

Des moyens sont prévus pour faire varier corrélativement le débit du ou des injecteurs de combustible 18 et, par un déplacement relatif des fourreaux 16 et 17, le débit d'air entrant dans la zone primaire 10 par la section libre commune des orifices conjugués 14,15.

Selon le mode de réalisation de la figure 1, le passage de dérivation 5 est limité par un caisson 7 qui est séparé du conduit de refoulement 4 par une cloison 19 en aval de laquelle est formée la branche 5a. La cloison 19 est percée d'un trou dont les bords forment un siège 20 avec lequel coopère un disque obturateur 21 situé en aval de ce siège. Le disque 21 est solidaire d'un piston d'équilibrage 22 qui traverse le siège 20 ainsi que, par l'intermédiaire de moyens d'étanchéité 23, la paroi du conduit de refoulement 4. Le disque 21 à piston 22, qui constitue les premiers moyens d'étranglement 12, est en équilibre sous l'effet d'une pression de référence $P_0$ qui s'exerce sur la section du piston 22, à la partie supérieure ou extérieure de celui-ci, et des pressions régnant en amont (pression $P_2$) et en aval (pression $P_7$) du disque obturateur 21 et qui s'exercent respectivement sur la face supérieure et sur la face inférieure de disque 21. Le cas échéant, un ressort de rappel (non montré) pourrait agit sur le piston 22. Si on appelle s la section du piston 22 et S la surface du disque 21, la valeur de la perte de charge relative nominale est donnée par la relation suivante, qui exprime les conditions d'équilibre du disque 21 (en l'absence du susdit ressort de rappel):

$$\frac{P_2 - P_7}{P_2 - P_{o2}} = \frac{s}{S}.$$

On voit donc que les premiers moyens d'étranglement 12 à disque 21 sont capables d'établir une baisse de pression $P_2 - P_7$ qui est pratiquement indépendante du rapport entre le débit d'air dans le passage de dérivation 5 et le débit d'air délivré par le compresseur 2 mais qui varie dans le même sens que la pression $P_2$ régnant en amont de ces premiers moyens d'étranglement 12. Ceux-ci pourraient d'ailleurs être remplacés par des moyens équivalents dont certains exemples ont été décrits dans le susdit brevet US 4 026 115.

Selon le mode de réalisation des figures 1 et 2, les moyens pour faire varier corrélativement de débit du ou des injecteurs 18 et le débit d'air entrant dans la zone primaire 10 sont constitués de la manière suivante. Le fourreau extérieur 17 est fixe par rapport au conduit de refoulement 4 tandis que le fourreau intérieur 16, qui est obturé d'un côté par un fond 24, est mobile en translation. L'espace 28, compris entre le fond 24 et une paroi fixe 26, est relié par des orifices 29 de section relativement grande au conduit de refoulement 4.

Un cylindre 34, solidaire du fond 24, traverse la paroi 26 par l'intermédiaire de moyens d'étanchéité 35 permettant le coulissement de ce cylindre 34. Une canalisation de refoulement de combustible 36 aboutit dans une chambre 37 portée par la paroi 26; cette chambre 37 communique avec le cylindre 34 par l'intermédiaire d'un orifice 38 traversant l'une des paoirs de celui-ci, la paroi opposée de ce cylindre 34 faisant partie du fond 24 et portant l'injecteur 18. Un pointeau fixe 39 coopère avec l'orifice 38 de façon à augmenter sa section à mesure que le fond 24 s'éloigne de la paroi fixe 26.

La pression du combustible qui s'exerce sur le cylindre 34 tend à déplacer vers la droite de la figure 2 le fourreau intérieur 16, donc à ouvrir en grand à la fois la section libre commune des orifices conjugués 14 et 15 et la section libre de l'orifice 38, ce qui assure le plein débit d'air et de combustible dans la chambre de combustion auxiliaire 6. Si l'énergie devant la turbine 3 augmente, la pression $P_3$ qui s'exerce sur la face de droite (selon la figure 2) du fond 24 augmente et fait reculer le fourreau intérieur 16 jusqu'à ce que la force hydraulique (pression du combustible) exercée sur ce fourreau 16 équilibre la force pneumatique exercée sur celui-ci. Il y a donc auto-régulation.

En définitive, les moyens venant d'être décrits font bien varier corrélativement le débit de combustible de l'injecteur 18 et le débit de combustible de l'injecteur 18 et le débit d'air entrant dans la zone primaire 10 par la section libre commune des orifices conjugués 14, 15. De tels moyens peuvent aussi être remplacés par des moyens équivalents dont certains exemples ont été décrits dans le susdit brevet US 4 026 115.

Enfin, le fond 24 est traversé par des orifices calibrés 40 et 33 qui assurent respectivement le refroidissement des parois de la zone primaire 10 de la chambre de combustion auxiliaire 6 à tous les régimes et l'alimentation en air comburant en régime de veilleuse. Ces orifices calibrés 40 et 33, qui n'ont d'ailleurs pas été évoqués dans le susdit brevet 4 026 115, constituent les susdits passages de section constante, en parallèle par rapport aux orifices conjugués 14 et 15, qui font partie des seconds moyens d'étranglement 13.

Le fourreau extérieur 17 est adapté au conduit de refoulement 4 de façon que les orifices 15 et 29 s'ouvrent dans ce dernier et il est prolongé par un conduit 42 qui limite la zone secondaire 11 et traverse le caisson 7. Le conduit d'échappement 8 du moteur 1 débouche dans le conduit 42 par l'intermédiaire d'un convergent ou mélangeur 27. Des orifices 43, ménagés dans le conduit 42 à l'intérieur du caisson 7, réunissent l'une à l'autre les parties aval des branches 5a et 5b. Un conduit terminal 44 relie le mélangeur 27 à la turbine 3, si bien que celle-ci peut recevoir les gaz d'échappement du moteur 1 et les gaz de combustion de la chambre 6.

On obtient ainsi un moteur à combustion interne dont on va rappeler ci-après le fonctionnement d'ensemble.

L'air délivré par le compresseur 2 se divise en deux courants: l'air qui traverse le moteur 1 et le courant complémentaire qui rejoint la turbine 3 à travers le passage de dérivation 5. Ce courant complémentaire se divise à nouveau en deux: une première partie qui alimente la zone primaire 10 à travers les orifices conjugués 14, 15 en proportion de préférence stoechiométrique avec le combustible introduit par le ou les injecteurs 18, et une deuxième partie qui pénètre dans la zone secondaire 11, par des jets d'air transversaux admis par les orifices 43, cette deuxième partie de courant complémentaire ayant préalablement traversé les premiers moyens d'étranglement 12 et venant diluer les gaz de combustion très chauds issus de la zone primaire 10.

Quand le moteur 1 accélère, le débit d'air qui le traverse augmente et le débit du courant complémentaire diminue dans le passage de dérivation 5. Les premiers moyens d'étranglement 12 se ferment donc progressivement et diminuent de plus en plus le débit d'air admis dans la zone secondaire 11. L'air admis dans la zone primaire 10, dont le débit ne dépend que de la charge du moteur 1 (et non de la vitesse de celui-ci), continue à assurer la combustion dans cette zone primaire 10 dans des conditions aussi voisines que possible de la stoéchiométrie. La dilution (donc le refroidissement) des gaz très chauds issus de cette zone primaire 10 est de moins en moins assurée par l'air secondaire (orifices 43) et de plus en plus par les gaz d'échappement du moteur 1, au niveau du mélangeur 27; la distance entre les orifices 43 et ce mélangeur 27 doit donc être aussi courte que possible pour éviter la surchauffe de la partie du conduit de liaison 42 située en aval des orifices 43.

L'air qui traverse la zone primaire 10 étant prélevé en amont des premiers moyens d'étranglement 12, la perte de charge due à la traversée des orifices conjugués 14, 15 est toujours maintenue quelle que soit la vitesse du moteur, grâce à la présence de ces premiers moyens d'étranglement 12. De ce fait, les jets d'air qui pénètrent dans la zone primaire 10 par la section libre commune des orifices conjugués 14, 15 ont toujours, quel que soit le régime de fonctionnement de la chambre 6, une vitesse et une pénétration suffisantes pour maintenir le degré de turbulence requis pour la combustion du combustible introduit par le ou les injecteurs 18.

Le schéma de la figure 3 indique comment se répartit l'air débité par le compresseur 2. Soit $Q_2$ le débit (en poids par unité de temps) de l'air refoulé par le compresseur 2. Le moteur 1 en absorbe une partie $Q_1$, le reste $Q_5 = Q_2 - Q_1$ empruntant le passage de dérivation 5. Ensuite, le débit $Q_5$ se répartit en un débit $Q_{5a}$, admis dans la zone secondaire 11 de la chambre de combustion 6 à travers les moyens d'étranglement 12 (air de dilution), en un débit $Q_{5b}$ admis dans la zone primaire 10 à travers les moyens d'étranglement 13 et en un débit $Q_{40}$ admis par les orifices 40, 33 au fond de la chambre 6. Le débit $Q_1$ dépend du régime du moteur 1 et de la pression de suralimentation engendrée par le compresseur 2.

La perte de charge relative entre le compresseur 2 et la turbine 3 varie selon la loi indiquée ci-dessus. Les écarts de régulation constatés et leurs causes possibles sont les suivants:

1 - La perte de charge relative réelle est inférieure à la perte de charge relative normale:

a) les premiers moyens d'étranglement 12 sont fermés normalement; le débit $Q_2$ du compresseur 2 est insuffisant (le moteur 1 aspire trop d'air); la fraction du débit $Q_5$ non contrôlée est trop importante;

b) les premiers moyens d'étranglement 12 sont coincés en position d'ouverture.

2 - La perte de charge relative réelle est supérieure à la perte de charge relative normale:

les premiers moyens d'étranglement 12 sont ouverts en grand et les pertes de charge parasites dans le passage de dérivation 5 sont trop élevées.

En conclusion, une fuite par la branche 5a de la chambre de combustion 6 en veilleuse, à débit compresseur $Q_2$ et débit moteur $Q_1$ donnés, a pour effet de diminuer le débit traversant les premiers moyens d'étranglement 12.

En conclusion, une fuite par la branche 5a de la chambre de combustion 6 en veilleuse, à débit compresseur $Q_2$ et débit moteur $Q_1$ donnés, a pour effet de diminuer le débit traversant les premiers moyens d'étranglement 12.

En conséquence et comme exposé brièvement en préambule:

— soit on augmente le débit du compresseur 2 mais on dégrade ainsi la consommation spécifique aux charges partielles;

— soit le débit traversant les premiers moyens d'étranglement 12 est insuffisant. Ceci apparaît au point de puissance maximale où le rapport du débit $Q_1$ prélevé sur le moteur 1 à celui $Q_2$ fourni par le compresseur 2 est le plus élevé. Dans ce cas, la perte de charge relative réelle est inférieure à la perte de charge relative nominale; cette dernière n'est pas maintenue, ce qui est défavorable en particulier pour un moteur 1 qui a besoin d'être balayé et, dans le cas des moteurs à quatre temps, pour la consommation spécifique (car la pression $P_3$ en amont de la turbine 3 augmente et donc le travail de refoulement du moteur 1 est plus élevé).

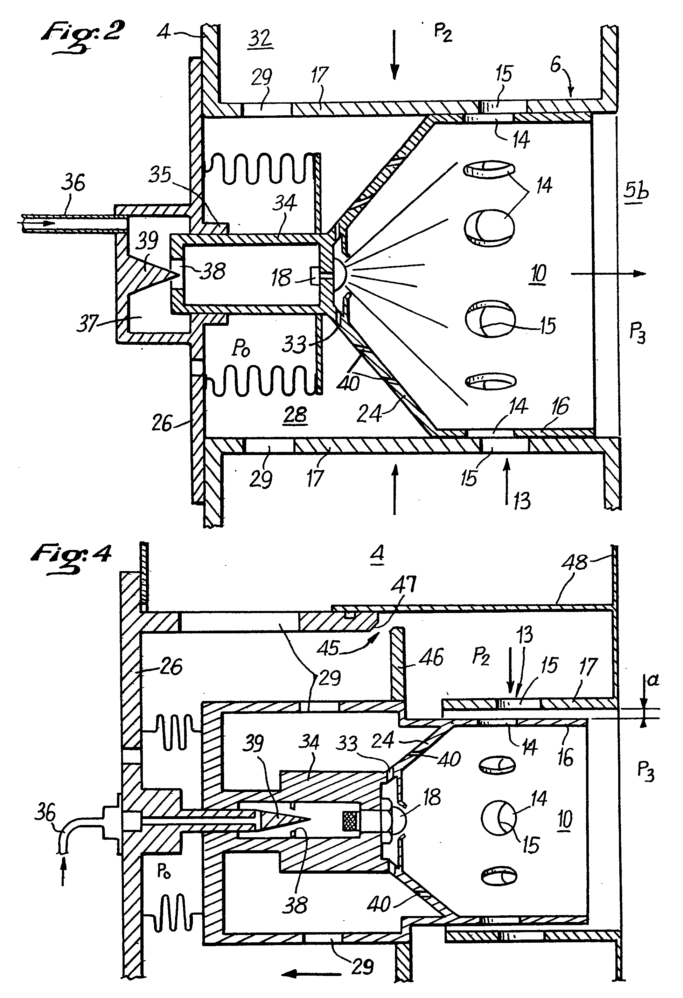

Pour éliminer ces difficultés, le moteur à combustion interne 1 conforme à l'invention est essentiellement caractérisé en ce que les organes cylindriques (ou fourreaux selon la plupart des modes de réalisation) intérieur 16 et extérieur 17 ont des dimensions radiales telles que, compte tenu des coefficients de dilatation thermique de leurs matières constitutives et des limites supérieure et inférieure de leurs températures de fonctionnement, il existe toujours entre eux un jeu radial a (figures 4 et 6 à 12) suffisant pour éviter tout contact entre la paroi latérale extérieure de l'organe cylindrique intérieur 16 et la paroi latérale intérieure de l'organe cylindrique extérieur 17, quel que soit le régime de fonctionnement de la chambre de combustion auxiliaire 6. En outre, des troisièmes moyens d'étranglement 45, à section de passage variable, sont montés en amont ou au niveau des passages conjugués 14, 15 des seconds moyens d'étranglement 13, selon le sens de circulation de l'air dans la deuxième branche 5b du passage de dérivation 5, et scnt agencés de telle manière

a) que leur section de passage minimale soit nulle et

b) que, quels que soient les degrés d'ouverture respectifs instantanés des seconds et des troisièmes moyens d'étranglement 13, 45, la section de passage des troisièmes moyens d'étranglement 45, à moins d'être nulle, reste toujours très supérieure (de préférence dans un rapport au moins égal à 5) à la section des orifices conjugués 14, 15 des seconds moyens d'étranglement 13.

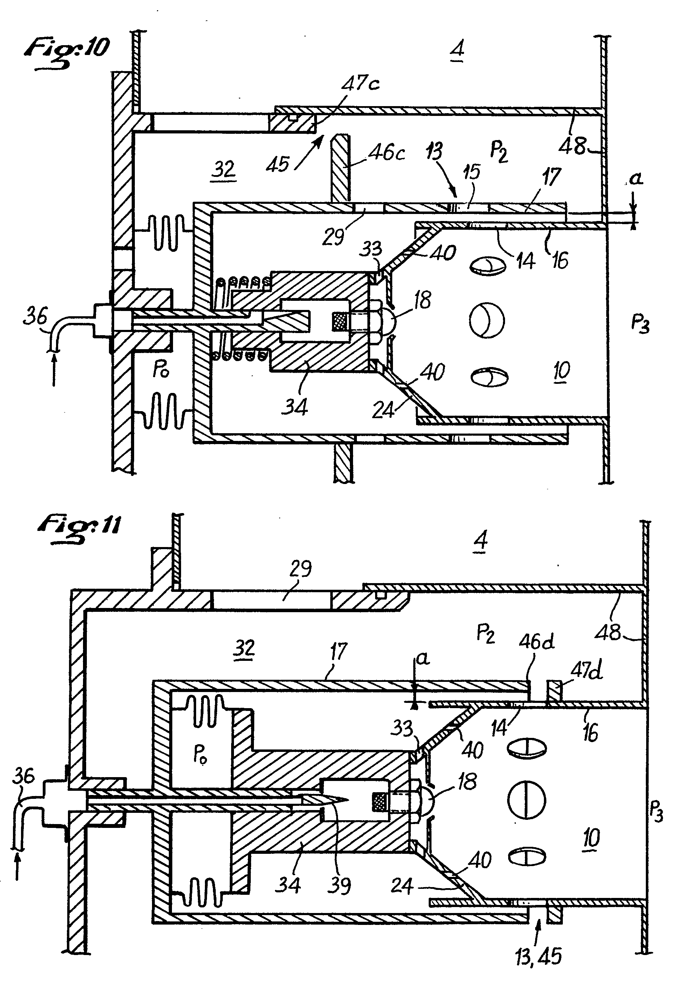

Selon une construction particulièrement simple, les troisièmes moyens d'étranglement 45 sont constitués par la combinaison d'un élément obturateur annulaire 46 (fig. 4 et 6) ou 46c (fig. 9 et 10), solidaire de l'un des organes cylindriques 16 (fig. 4 et 6) ou 17 (fig. 9 et 10), et d'un siège 47 (fig. 4 et 6) ou 47c (fig. 9 et 10), solidaire de l'autre organe cylindrique 17 (fig. 4 et 6) ou 16 (fig. 9 et 10) et coopérant avec ledit élément annulaire 46 (fig. 4 et 6) ou 46c (fig. 9 et 10), le diamètre de ce siège 47 ou 47c étant largement supérieur aux diamètres respectifs desdits organes cylindriques 16, 17.

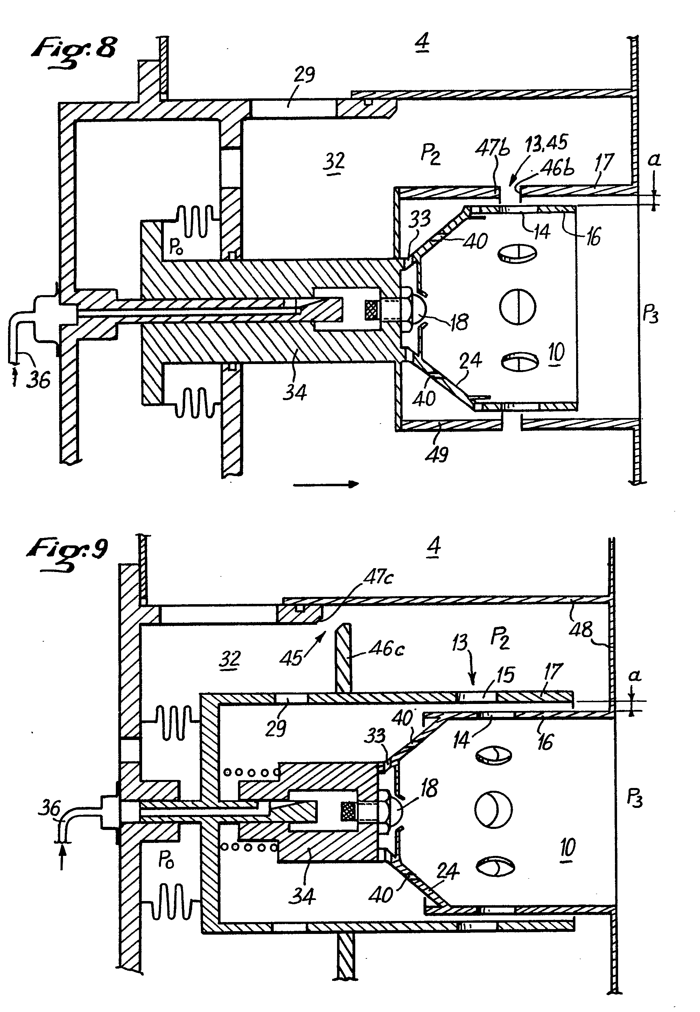

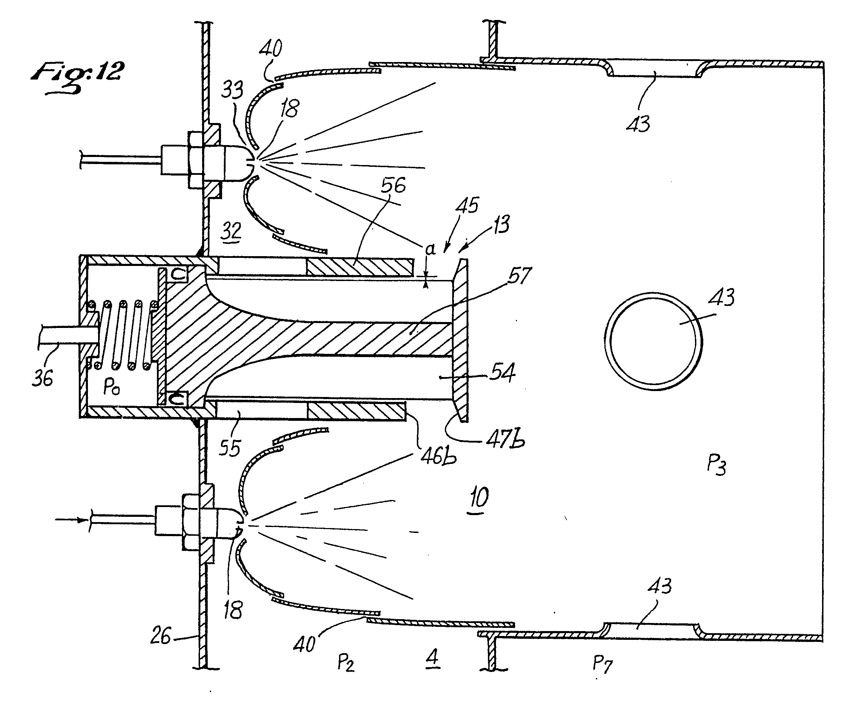

En variante, les troisièmes moyens d'étranglement 45 sont constitués par la combinaison d'un élément obturateur annulaire 46b (fig. 7 et 8) ou 46d (fig. 11), se confondant avec l'extrémité libre de l'organe cylindrique extérieur 17, et d'un siège 47b (fig. 7 et 8) ou 47d (fig. 11), solidaire de l'organe cylindrique intérieur 16 et coopérant avec ladite extrémité libre, ce siège 47b ou 47d étant disposé au voisinage immédiat des passages conjugués. Dans le cas de cette variante, les passages conjugués 14, 15 ne sont constitués par une couronne d'orifices à contour individuel fermé que sur le fourreau intérieur 16 mais pas sur le fourreau extérieur 17.

Dans le premier cas (figures 4, 6, 9 et 10), les troisièmes moyens d'étranglement 45 sont distincts des seconds moyens d'étranglement 13, ces derniers étant constitués par deux couronnes d'orifices conjugués 14 et 15 ménagés respectivement dans les deux fourreaux 16 et 17. Selon les modes de réalisation des figures 4 et 6, le fourreau extérieur 17 est fixe et le fourreau intérieur 16 est mobile en translation comme dans la construction connue des figures 1 et 2, c'est-à-dire en se déplaçant vers la gauche des figures 4 et 6 pour diminuer la section commune des orifices conjugués 14 et 15. Selon les modes de réalisation des figures 9 et 10, c'est au contraire le fourreau intérieur 16 qui est fixe et le fourreau extérieur 17 qui est mobile en translation. Suivant les divers modes de réalisation des figures 4, 6, 9 et 10, le siège 47 ou 47c est rendu solidaire du fourreau fixe 17 ou 16 par un support rigide 48. L'élément obturateur 46 ou 46c est constitué par un disque plan fixé à la surface extérieure du fourreau mobile 16 ou 17.

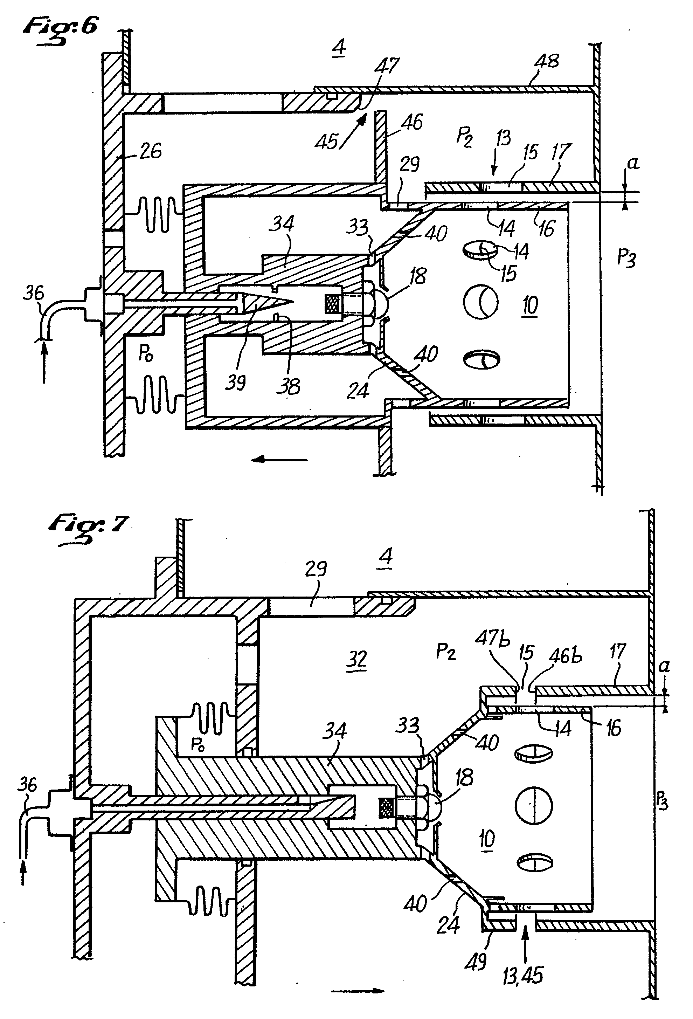

Pour bien faire comprendre l'entrée en fonction successive des seconds moyens d'étranglement 13 et des troisièmes moyens d'étranglement 45, il semble utile de donner un exemple numérique de réalisation. Supposons que les fourreaux 16, 17 de la figure 4 comprennent chacun douze orifices circulaires 14, 15 de 2R = 7 mm de diamètre. Soit x (en mm) la course du fourreua mobile 16 à partir de la position de pleine coïncidence des orifices 14 et 15. L'aire commune à deux de ces orifices est indiquée par des hachures à la figure 5. Si l'on appelle $\alpha$ le demi-angle au centre de l'arc où s'inscrit cette aire sur chacun des cercles limitant ces orifices, l'aire commune ou aire découverte totale est égale à:

$$48.R \left( \frac{\pi R \alpha}{180} - \frac{x}{4} \sin\alpha \right) \text{ mm2}$$

$$\text{avec } \alpha = \text{arc cos} \frac{x}{2R}.$$

L'aire au droit des troisièmes moyens d'étranglement 45, c'est-à-dire entre l'élément obturateur 46 et le siège 47, est égale à

(12 - x). 395 mm2 environ, si le siège 47 a un diamètre de 126 mm.

On obtient ainsi les valeurs successives suivantes en fonction de x:

| X (mm) | α (°) | Aire totale commune orifices 14,15 (mm2) | Aire de passage du siège 47 (mm2) |
|---|---|---|---|
| 0 | 90 | 462 | 4750 |
| 1 | 81,8 | 399 | 4354 |
| 2 | 73,4 | 336 | 3958 |
| 3 | 64,6 | 275 | 3563 |
| 4 | 55,2 | 214 | 3167 |
| 5 | 44,4 | 154 | 2771 |
| 6 | 31,0 | 94 | 2375 |
| 7 | 0 | 0 | 1979 |
| 8 | — | — | 1583 |
| 9 | — | — | 1187 |
| 10 | — | — | 792 |
| 11 | — | — | 396 |
| 12 | — | — | 0 |

On constate que, sauf en fin de course du fourreau mobile 16, la section commune des orifices conjugués 14, 15 est nettement plus petite que la section de passage au niveau du siège 47, dans un rapport inférieur à 1/5. La baisse de pression, qui est inversement proportionnelle au carré des sections de passage, s'établit donc de part et d'autre des orifices conjugués 14, 15 plutôt que de part et d'autre du siège 47. On a donc une bonne pénétration des jets d'air dans la zone primaire 10. C'est seulement en fin de course du fourreau mobile 16 que l'élément obturateur 46 vient s'appliquer sur le siège 47. On évite alors une fuite d'air notable par le jeu annulaire $a$. On est donc assuré que le débit $Q_1$ adsorbé par le moteur 1 est suffisant, sans que le compresseur 2 doive être surdimensionné. Néanmoins, il passe un débit d'air suffisant par les orifices 33 pour alimenter l'injecteur 18 en régime de veilleuse et par les orifices 40 pour refroidir les parois de la chambre de combustion auxiliaire 6.

Le mode de réalisation de la figure 6 diffère de celui de la figure 4 seulement par le fait que les orifices 33 et 40 sont situés, non pas en amont (figure 4), mais en aval (figure 6) des troisièmes moyens d'étranglement 45, ce qui contribue encore à augmenter le rapport $Q_1/Q_2$.

Le mode de réalisation de la figure 7 diffère de celui de la figure 4, d'une part, par le fait que le fourreau intérieur 16 se déplace en translation en sens inverse (c'est-à-dire vers la droite de la figure 7) pour diminuer la section commune des passages conjugués 14 et 15 et, d'autre part, par le fait que les troisièmes moyens d'étranglement 45 sont confondus avec les seconds moyens d'étranglement 13. Comme dans le cas précédent, le fourreau intérieur 16 est muni d'une couronne d'orifices circulaires séparés 14 mais les orifices 15, conjugués des orifices 14, sont réunis en un unique intervalle annulaire entre le bord libre d'un fourreau auxiliaire 49, porté coaxialement par le fourreau intérieur mobile 16 à l'extérieur de celui-ci et constituant le susdit siège 47b, et l'élément obturateur annulaire 46b, constitué par l'extrémité arrière libre du fourreau extérieur fixe 17. Ceci nécessite bien entendu une modification appropriée des moyens réglant le débit du combustible admis à l'injecteur 18.

Le mode de réalisation de la figure 8 diffère de celui de la figure 7 seulement par le fait que les orifices 33 et 40 sont situés non pas en amont (figure 7), mais en aval (figure 8) des troisièmes moyens d'étranglement 45. Ceci nécessite uniquement de reculer l'endroit par lequel le fourreau auxiliaire 49 est attaché au fond 24 ou au cylindre 34.

Le mode de réalisation de la figure 9 diffère de celui de la figure 4 par le fait que le fourreau extérieur 17, au lieu d'être fixe (figure 4), est mobile en translation (figure 9) tandis que le fourreau intérieur 16, au lieu d'être mobile (figure 4), est fixe (figure 9). Par conséquent, l'élément obturateur annulaire 46 ou 46c est solidaire, non pas du fourreau intérieur 16 (figure 4), mais du fourreau extérieur 17 (figure 9). Dans les deux cas, le fourreau mobile 16 (figure 4) ou 17 (figure 9) se déplace dans le même sens.

Le mode de réalisation de la figure 10 diffère de celui de la figure 9 seulement par le fait que les orifices 33 et 40 sont situés non pas en amont (figure 9), mais en aval (figure 10) des troisièmes moyens d'étranglement 45. A cet effet, les orifices 29, ménagés dans le fourreau extérieur 17 pour alimenter les orifices 33 et 40, sont placés ou bien en amont (figure 9), ou bien en aval (figure 10) de l'élément obturateur annulaire 46c.

Le mode de réalisation de la figure 11 diffère de celui de la figure 8 par le fait que le fourreau extérieur 17, au lieu d'être fixe (figure 8), est mobile en translation (figure 1) tandis que le fourreau intérieur 16, au lieu d'être mobile (figure 8), est fixe (figure 11).

Le fonctionnement des modes de réalisation des figures 6 à 11 est analogue à celui de la figure 4, les lois de variation des seconds et troisièmes moyens d'étranglement 13 et 45 étant quelque peu modifiées mais aboutissant au même effet global.

Le mode de réalisation de la figure 12 diffère de celui de la figure 4 sur les points suivants:

a) Comme il a été indiqué ci-dessus, plusieurs injecteurs 18 sont disposés en couronne en remplacement d'un injecteur unique.

b) Les organes intérieur et extérieur, munis des passages de section libre variable, ne sont pas constitués par une paire de fourreaux 16 et 17, mais par un fourreau extérieur fixe 56, relié par des trous d'entrée d'air 55 au conduit de refoulement 4, et par un plongeur 57, susceptible de coulisser à l'intérieur du fourreau 56.

c) Les passages de section libre variable sont constitués dans ce cas par des rainures longitudinales 54, disposées dans le plongeur cylindrique 57 selon des plans axiaux et communiquant en permanence avec les trous d'entrée 55 et, d'une manière analogue à la construction des figures 7 et 8, par un intervalle annulaire entre le bord libre du fourreau fixe 56, constituant le susdit élément obturateur 46b, et un siège annulaire 47b porté par l'extrémité libre du plongeur cylindrique 57.

## Revendications

1. Moteur à combustion interne suralimenté (1), en particulier moteur Diesel suralimenté, comprenant, d'une part, un compresseur (2) qui débite de l'air frais en parallèle sur le moteur (1) et sur un passage de dérivation (5) muni d'une chambre de combustion auxiliaire (6) et, d'autre part, une turbine (3) qui reçoit les gaz d'échappement du moteur (1) et les gaz issus de la chambre de combustion auxiliaire (6) et qui entraîne mécaniquement le compresseur (2),

lequel passage de dérivation (5) est divisé en deux branches principales (5a, 5b) dont la première (5a) aboutit dans une zone de dilution ou «zone secondaire» située en aval de la partie amont ou «zone primaire» (11) de la chambre de combustion auxiliaire (6) et est munie de premiers moyens d'étranglement (12) à section de passage variable et dont la deuxième branche (5b) part d'un endroit situé en amont des premiers moyens d'étranglement (12) et débouche dans la zone primaire (10) par l'intermédiaire de seconds moyens d'étranglement (13),

lesquels seconds moyens d'étranglement (13) comprennent des passages (14, 15; 54) de section libre variable, ménagés respectivement dans deux organes intérieur (16; 57) et extérieur (17; 56) qui soit mobiles l'un par rapport à l'autre et dont l'un (16; 57) délimite au moins en partie la zone primaire (10) alors que l'autre (17; 56) est logé au moins en partie dans une cavité (32) reliée à la sortie du compresseur (2), au moins un injecteur de combustible (18) débouchant dans la zone primaire (10) à proximité immédiate des susdits passages (14, 15; 54),

des moyens (38, 39) étant prévus pour faire varier corrélativement le débit du ou des injecteurs (18) en combustible et, par un déplacement relatif des organes intérieur (16; 57) et extérieur (17; 56), le débit d'air entrant dans la zone primaire (10) par la section libre desdits passages (14, 15; 54), caractérisé en ce que des passages de section constante (33, 40), sont mis en parallèle par rapport aux susdits passages (14, 15; 54),

en ce que les organes intérieur (16; 57) et extérieur (17; 56) ont des dimensions radiales telles que, compte tenu des coefficients de dilatation thermique de leurs matières constitutives et des limites supérieure et inférieure de leurs températures de fonctionnement, il existe toujours entre eux un jeu radial (a) suffisant pour éviter tout contact latéral entre ces organes (16, 17; 56, 57) quel que soit le régime de fonctionnement de la chambre de combustion auxiliaire (6), et

en ce que des troisièmes moyens d'étranglement (45) à section de passage variable sont montés en amont ou à proximité des passages (14, 15; 54) des seconds moyens d'étranglement (13), selon le sens de circulation de l'air dans la deuxième branche (5b) du passage de dérivation (5), et sont agencés de telle manière:

a) que leur section de passage minimale soit nulle et

b) que, quels que soient les degrés d'ouverture respectifs instantanés des seconds et troisièmes moyens d'étranglement (13, 45), la section de passage des troisièmes moyens d'étranglement (45) reste toujours, à moins d'être nulle, essentiellement supérieure à la section libre des passages (14, 15; 54) des seconds moyens d'étranglement (13).

2. Moteur selon la revendication 1, caractérisé en ce que les premiers moyens d'étranglement (12) sont agencés de manière à établir une baisse de pression qui est pratiquement indépendante du rapport entre le débit d'air dans le passage de dérivation (5) et le débit total d'air délivré par le compresseur (2) mais qui varie dans le même sens que la pression régnant en amont des premiers moyens d'étranglement (12).

3. Moteur selon l'une des revendications 1 et 2, caractérisé en ce que le rapport entre la section de passage des troisièmes moyens d'étranglement (45), à moins d'être nulle, et la section libre des passages (14, 15) des seconds moyens d'étranglement (13) reste supérieur à 5 dans toutes leurs positions instantanées respectives.

4. Moteur selon l'une quelconque des revendications 1 à 3, caractérisé en ce que les troisièmes moyens d'étranglement (45) sont constitués par la combinaison d'un élément obturateur annulaire (46, 46c), monté sur l'un des organes cylindriques (16 ou 17), et d'un siège (47, 47c), solidaire de l'autre organe cylindrique (17 ou 16) et coopérant avec ledit élément annulaire (46, 46c), le diamètre de ce siège (47, 47c) étant largement supérieur aux diamètres respectifs desdits organes cylindriques (16, 17) (figures 4, 6, 9 et 10).

5. Moteur selon l'une quelconque des revendications 1 à 3, caractérisé en ce que les troisièmes moyens d'étranglement (45) sont constitués par la combinaison d'un élément obturateur annulaire (46b, 46d), se confondant avec l'extrémité libre de l'organe cylindrique extérieur (17), et d'un siège (47b, 47d), solidaire de l'organe cylindrique intérieur (16) et coopérant avec ladite extrémité libre, ce siège (47b, 47d) étant disposé au voisinage immédiat des passages de section variable (14, 15) (figures 7, 8 et 11).

6. Moteur selon l'une quelconque des revendications 1 à 5, caractérisé en ce que les passages de section constante (33, 40) des seconds moyens d'étranglement (13) communiquent directement avec la susdite cavité (32) reliée à la sortie du compresseur (2) (figures 7 et 9).

7. Moteur selon l'une quelconque des revendications 1 à 5, caractérisé en ce que les passages de section constante (33, 40) des seconds moyens d'étranglement (13) communiquent par l'intermédiaire des troisièmes moyens d'étranglement (45) avec la cavité (32) reliée à la sortie du compresseur (2) (figures 4, 6, 8, 10 et 11).

**Patentansprüche**

1. Aufgeladene Brennkraftmaschine (1), insbesondere aufgeladener Dieselmotor, welcher einerseits einen Frischluft parallel dem Motor (1) und einer mit einer Hilfsverbrennungskammer (6) ausgestatteten Zweigleitung (5) zuführenden Kompressor (2) und anderseits eine den Kompressor (2) mechanisch antreibende und die Abgase des Motors (1) und die aus der Hilfsverbrennungskammer (6) ausströmenden Gase aufnehmende Turbine (3) aufweist,

wobei die Zweigleitung (5) in zwei Hauptzweige (5a, 5b) geteilt ist, von welchen der erste (5a) in eine stromab des stromaufseitigen Teils oder der «Primärzone» (10) der Hilfsverbrennungskammer (6) gelegene Verdünnungszone oder «Sekundärzone» (11) mündet und mit einem ersten Drosselorgan (12) veränderlichen Durchlassquerschnittes ausgestattet ist und von welchen der zweite Zweig (5b) von einer stromauf des ersten Drosselorgans (12) gelegenen Stelle ausgeht und in die Primärzone (10) über ein zweites Drosselorgan (13) mündet,

wobei das zweite Drosselorgan (13) Durchlässe (14, 15; 54) variablen Querschnitts aufweist, die in zwei gegeneinander verschiebbaren Teilen, einem Innenteil (16; 57) und einem Aussenteil (17; 56), vorgesehen sind, von welchen einer (16; 57) zumindest zum Teil die Primärzone (10) begrenzt und von welchen der andere (17; 56) zumindest zum Teil in einem mit dem Ausgang des Kompressors (2) verbundenen Hohlraum (32) liegt, und wobei ein Brennstoffeinspritzorgan (18) in unmittelbarer Nähe dieser Durchlässe (14, 15; 54) in die Primärzone mündet,

und wobei Einrichtungen (38, 39) zum zusammengehörigen Verändern der vom Einspritzorgan oder den Einspritzorganen (18) geförderten Brennstoffmenge und, durch Relativverschiebung zwischen Innenteil (16; 57) und Aussenteil (17; 56), der Menge der über den freien Querschnitt der Durchlässe (14, 15; 54) in die Primärzone (10) eintretenden Luft vorgesehen sind,

dadurch gekennzeichnet, dass Durchlässe konstanten Durchlassquerschnittes (33, 40) parallel zu den Durchlässen (14, 15; 54) geschaltet sind,

dass der Innenteil (16; 57) und der Aussenteil (17; 56) unter Berücksichtigung der Wärmedehnungskoeffizienten ihrer Werkstoffe und der oberen Grenze und der unteren Grenze ihres Arbeitstemperaturbereiches solche radiale Abmessungen besitzen, dass in jeglichem Betriebsbereich der Hilfsverbrennungskammer (6) zwischen diesen beiden Teilen stets ein zur Verhinderung einer seitlichen Berührung zwischen den beiden Teilen (16, 17; 56, 57) ausreichendes radiales Spiel (a) besteht, und

dass stromauf oder in Nähe der Durchlässe (14, 15; 54) des zweiten Drosselorgans (13), in Strömungsrichtung der Luft im zweiten Zweig (5b) der Zweigleitung (5) gesehen, ein drittes Drosselorgan (45) veränderlichen Durchlassquerschnittes angeordnet ist, welches solcherart betätigt wird, dass

(a) dessen kleinster Durchlassquerschnitt gleich ist Null und dass

(b) bei jedem beliebigen Aufsteuerungsgrad des zweiten und des dritten Drosselorgans (13 und 45) der Durchlassquerschnitt des dritten Drosselorgans (45), auch wenn er Null sein kann, stets wesentlich grösser ist als der freie Querschnitt der Durchlässe (14, 15; 54) des zweiten Drosselorgans (13).

2. Motor nach Anspruch 1, dadurch gekennzeichnet, dass das erste Drosselorgan (12) derart betätigt wird, dass der erzeugte Druckabfall vom Verhältnis der in der Zweigleitung (5) strömenden Luftmenge zur vom Kompressor (2) insgesamt geförderten Luftmenge praktisch unabhängig ist, jedoch im gleichen Sinne verändert wird wie der stromauf des ersten Drosselorgans (12) herrschende Druck.

3. Motor nach Anspruch 1 und 2, dadurch gekennzeichnet, dass das Verhältnis des Durchlassquerschnittes des dritten Drosselorgans (45), sofern dieser nicht Null beträgt, zum freien Querschnitt der Durchlässe (14, 15) des zweiten Drosselorgans (13) in allen Momentanstellungen der Drosselorgane den Wert 5 übersteigt.

4. Motor nach irgendeinem der Ansprüche 1 bis 3, dadurch gekennzeichnet, dass das dritte Drosselorgan (45) durch die Kombination eines auf einem der zylindrischen Teile (16 oder 17) montierten ringförmigen Schliessorgans (46, 46c) mit einem mit dem anderen zylindrischen Teil (17 oder 16) fest verbundenen und mit dem ringförmigen Schliessorgan (46, 46c) zusammenwirkenden Sitz (47, 47c) gebildet ist, wobei der Durchmesser dieses Sitzes (47, 47c) die Durchmesser der zylindrischen Teile (16, 17) wesentlich übersteigt (Figuren 4, 6, 9 und 10).

5. Motor nach irgendeinem der Ansprüche 1 bis 3, dadurch gekennzeichnet, dass das dritte Drosselorgan (45) durch die Kombination eines am freien Ende des zylindrischen Aussenteiles (17) vorgesehenen ringförmigen Verschlussorgans (46b, 46d) mit einem am zylindrischen Innenteil (16) festgelegten und mit dem erwähnten freien Ende zusammenwirkenden Sitz (47b, 47d) gebildet ist, welcher in unmittelbarer Nähe der Durchlässe (14, 15) veränderlichen Querschnitts angeordnet ist (Figuren 7, 8 und 11).

6. Motor nach irgendeinem der Ansprüche 1 bis 5, dadurch gekennzeichnet, dass die Durchlässe (33, 40) konstanten Querschnitts des zweiten Drosselorgans (13) direkt mit dem mit dem Ausgang des Kompressors (2) verbundenen Hohlraum (32) in Verbindung stehen (Figuren 7 und 9).

7. Motor nach irgendeinem der Ansprüche 1 bis 5, dadurch gekennzeichnet, dass die Durchlässe (33, 40) konstanten Querschnitts des zweiten Drosselorgans (13) mit dem mit dem Ausgang des Kompressors (2) verbundenen Hohlraum (32) unter Zwischenschaltung des dritten Drosselorgans (45) in Verbindung stehen (Figuren 4, 6, 8, 10 und 11).

**Claims**

1. A supercharged internal combustion engine (1), in particular a supercharged Diesel engine, comprising, on one hand, a compressor (2) which delivers fresh air in parallel to the engine (1) and to a branch passage (5) provided with an auxiliary combustion chamber (6) and, on the other hand, a turbine (3) which receives the exhaust gases of the engine (1) and the gases issuing from the auxiliary combution chamber (6) and which mechanically drives the compressor (2),

which branch passage (5) is divided into two main branches (5a, 5b) of which the first (5a) leads to a dilution zone or «secondary zone» located downstream of the upstream part or «primary zone» (11) of the auxiliary combustion chamber (6) and is provided with first throttle means (12) having a variable passage section whereas the second branch (5b) leads from a region located upstream of the first throttle means (12) and opens into the primary zone (10) through second throttle means (13),

said second throttle means (13) having passages (14, 15; 54) which have a variable free section respectively provided in an inner element (16; 57) and an outer element (17; 56) which are movable relative to each other, of which one element (16; 67) defines at least in part the primary zone (10) while the other element (17; 56) is disposed at least partly in a cavity (32) connected to the output of the compressor (2), at least one fuel injector (18) opening into the primary zone (10) in immediate proximity to said passages (15, 15; 54),

means (32, 39) being provided for varying correlatively the flow of fuel of the injectors (18) and, by a relative displacement of the inner element (16; 57) and outer element (17; 56), the air flow entering the primary zone (10) through the free section of said passages (14, 15; 54),

characterised in that passages (33, 40) of constant section are put in parallel realtive to said passages (14, 15; 54),

the inner element (16; 57) and outer element (17; 56) have such radial dimensions that, taking into account the coefficients of thermal expansion of their constituent materials and the upper and lower limits of their operating temperatures, there always exists therebetween a sufficient radial clearance (a) to avoid any lateral contact between these elements (16, 17; 56, 57) irrespective of the rate of operation of the auxiliary combustion chamber (6), and third throttle means (45) having a variable passage section are disposed upstream of or in proximity to the passages (14, 15; 54) of the second throttle means (13), with respect to the direction of the flow of air in the second branch (5b) of the branch passage (5), and are so arranged

a) that their minimum passage section is nil and

b) that, regardless of the instantaneous respective degrees of opening of the second and third throttle means (13, 45), the passage section of the third throttle means (45) always remains, unless it is nil, essentially greater than the free section of the passages (14, 15; 54) of the second throttle means (13).

2. An engine according to claim 1, characterized in that the first throttle means (12) are so arranged as to establish a pressure drop which is practically independent of the ratio between the air flow in the branch passage (5) and the total air flow of the air delivered by the compressor (2) but which varies in the same direction as the pressure prevailing upstream of the first throttle means (12).

3. An engine according to claim 1 or 2, characterized in that the ratio between the passage section of the third throttle means (45), unless it is nil, and the free section of the passages (14, 15) of the second throttle means (13) remains greater than 5 in all their respective instantaneous positions.

4. An engine according to any one of the claims 1 to 3, characterized in that the third throttle means (45) are constituted by the combination of an annular closure element (46, 46c) mounted on one of the cylindrical elements (16 or 17), and a seat (47, 47c) connected to the other cylindrical element (17 or 16) and cooperating with said annular element (46, 46c), the diameter of this seat (47, 47c) being distinctly greater than the respective diameters of said cylindrical elements (16, 17) (figures 4, 6, 9 and 10).

5. An engine according to any one of the claims 1 to 3, characterized in that the third throttle means (45) are constituted by the combination of an annular closure element (46b, 46d) coinciding with the free end of the outer cylindrical element (17), and a seat (47b, 47d) connected to the inner cylindrical element (16) and cooperating with said free end, this seat (47b, 47d) being disposed in the immediate vicinity of the passages (14, 15) (figures 7, 8 and 11) of variable section.

6. An engine according to any one of the claims 1 to 5, characterized in that the passages of constant section (33, 40) of the second throttle means (13) communicate directly with said cavity (32) connected to the output of the compressor (2) (figures 7 and 9).

7. An engine according to any one of claims 1 to 5, characterized in that the passages of constant section (33, 40) of the second throttle means (13) communicate through the third throttle means (45) with the cavity (32) connected to the output of the compressor (2) (figures 4, 6, 8, 10 and 11).

*Fig.1*

*Fig.3*

*Fig.5*

0 031 770

Fig.2

Fig.4

Fig.6

Fig.7

0 031 770

15

*Fig. 8*

*Fig. 9*

*Fig:10*

*Fig:11*

*Fig.12*